# FASCICULE DE BREVET EUROPEEN

(11) **EP 2 535 996 B1**
(45) Date de publication et mention de la délivrance du brevet: **19.09.2018**
(21) Numéro de dépôt: 12168687.7
(22) Date de dépôt: 21.05.2012
(51) Int. Cl.: H02J 1/10, H02J 3/38

(54) **Mécanisme de commande sécurisé pour système photovoltaïque distribué**
Gesicherter Steuermechanismus für verteiltes Fotovoltaiksystem
Secure control mechanism for distributed photovoltaic system

(30) Priorité: 15.06.2011 FR 1155190
(43) Date de publication de la demande: 19.12.2012
(73) Titulaire: Schneider Electric Industries SAS, 92500 Rueil-Malmaison (FR)
(72) Inventeur: Ecrabey, Jacques, 07500 Guilherand Granges (FR); Petit, Christian, 38450 Vif (FR); JeanJean, Yves, 38420 Domene (FR); Almeida, Antonio, 38340 Voreppe (FR)
(74) Mandataire: Dufresne, Thierry

(56) Documents cités:
- CN-A- 101 841 169
- US-A1- 2004 159 102
- US-A1- 2007 164 612
- US-A1- 2007 165 347
- US-A1- 2009 121 549
- US-A1- 2009 179 500
- US-A1- 2010 001 587
- US-A1- 2010 133 911
- US-A1- 2011 096 579

## Description

### Domaine technique de l'invention

La présente invention se rapporte à un système pour gérer la commande d'une installation de production d'électricité photovoltaïque. Plus précisément, l'invention propose un mécanisme de commande et de sécurité pour équipement de production d'électricité photovoltaïque, ledit mécanisme ne nécessitant aucun système de communication intégré permettant à ses différents composants de communiquer entre eux.

### Etat de la technique

De manière connue, un générateur photovoltaïque est composé de panneaux photovoltaïques et d'un onduleur. L'onduleur permet de transformer le courant continu issu des panneaux photovoltaïques en courant alternatif destiné à un réseau de distribution.

Pour constituer une installation photovoltaïque de production d'électricité, les panneaux photovoltaïques sont connectés en série pour augmenter la tension et constituer des chaînes de panneaux photovoltaïques, lesdites chaînes étant connectées en parallèle pour augmenter la puissance et constituer des groupes. Plusieurs groupes peuvent être raccordés en parallèle à l'entrée d'un onduleur pour former un générateur photovoltaïque.

Ce mode d'organisation d'une installation photovoltaïque présente différentes contraintes. D'abord, tout ombrage sur un panneau photovoltaïque, dû à un arbre, un mur ...etc., va modifier les caractéristiques électriques et réduire la production de la chaîne dans laquelle est inclus le panneau ombré. Cette chaîne va perturber les autres chaînes du groupe dans lequel elle est incluse, car l'équilibre des tensions n'est plus garanti. Des salissures sur les cellules photovoltaïques constituant les panneaux peuvent également conduire à ce type de comportement.

Par ailleurs, les modules photovoltaïques constitutifs d'un tel générateur photovoltaïque doivent tous avoir des caractéristiques identiques. Toute discordance des caractéristiques des modules photovoltaïques utilisés peut également conduire, bien que dans une moindre mesure, à réduire la productivité d'un générateur.

Un autre inconvénient réside dans le fait que de la tension est toujours présente sur le bus continu alimenté par les panneaux photovoltaïques, même en cas d'arrêt de l'onduleur ou de déconnexion du réseau de distribution, car la tension est imposée par les chaînes ou les groupes photovoltaïques. Cela pose un problème de sécurité électrique, par exemple lors de l'intervention d'équipes de secours sur l'installation.

Dans le but de s'affranchir de ces contraintes, une idée consiste à associer des convertisseurs d'énergie aux modules photovoltaïques. Au moyen de ces convertisseurs, il apparaît en effet possible de réduire l'impact d'un module photovoltaïque sur la productivité des autres modules d'un générateur.

Dans l'état de la technique, des générateurs photovoltaïques comprenant des convertisseurs d'énergie ont été mis au point. Ces solutions sont notamment décrites dans la demande de brevet US2009/0150005. Ce document décrit un générateur photovoltaïque mettant en oeuvre des convertisseurs d'énergie continu / continu intégrés aux panneaux photovoltaïques, et connectés en parallèle au bus continu alimenté par lesdits panneaux. Selon cette technologie, un module central additionnel est utilisé pour piloter l'ensemble de l'installation au travers d'un réseau de communication intégré dans le bus de puissance alimenté par les panneaux photovoltaïques. La publication de la demande de brevet US2009/0150005 décrit le contrôle des modules photovoltaïques par l'intermédiaire dudit réseau de communication.

Une autre technologie connue repose sur l'utilisation de convertisseurs d'énergie continu / continu pour élever la tension des panneaux photovoltaïques à la tension du bus alimenté par lesdits panneaux et régulée par l'onduleur, par exemple entre 250V et 340V. Chaque module photovoltaïque communique via courant porteur à l'aide d'un module de communication pour transmettre des grandeurs électriques et recevoir des consignes de démarrage ou d'arrêt en fonction des conditions. La demande de brevet WO 2009/082708 divulgue ainsi l'utilisation de réseaux de communication intégrés, par courant porteur ou sans fil, pour le contrôle des convertisseurs de puissance d'un générateur photovoltaïque.

L'inconvénient majeur de toutes ces architectures distribuées de systèmes photovoltaïques connues réside dans la complexité de l'électronique intégrée dans les panneaux photovoltaïques, qui induit une probabilité de défaillance défavorable à la production d'énergie. Les systèmes appartenant à l'état de la technique décrit ci-dessus sont dépendants du fonctionnement correct de leur système de communication intégré, puisque c'est ce système qui autorise la production d'énergie. Les composants électroniques nécessaires à cette fonction sont donc critiques pour le système et contribuent à dégrader la disponibilité et la productivité du système de génération d'énergie photovoltaïque.

Le but de l'invention est donc de proposer une solution alternative aux technologies existantes, à travers un système de commande d'un équipement de production d'électricité photovoltaïque ayant un comportement sûr dans toutes les phases de fonctionnement, sans recours à un système de communication.

Le document US2009/0179500 décrit un dispositif selon le préambule de la revendication 1.

### Exposé de l'invention

Ce but est atteint par un système selon la revendication 1.

Avantageusement, ledit au moins un micro-convertisseur est configuré pour :
- injecter un maximum de puissance des modules photovoltaïques dans le bus continu lorsque la tension du bus continu est comprise entre une première tension Vb et une deuxième tension Vc ;
- stopper l'injection de puissance des modules photovoltaïques dans le bus continu lorsque la tension du bus continu est inférieure à une tension seuil bas Va ou supérieure à une tension seuil haut Vd ;
avec 0 < Va < Vm < Vb < Vc < Vd.

Avantageusement, les moyens de gestion du bus continu peuvent être configurés de telle sorte que, lorsque la tension du bus continu est supérieure à un seuil de tension Vs, ledit seuil de tension Vs étant supérieur à la deuxième tension Vc et inférieur à la tension seuil haut Vd, ledit dispositif de gestion du bus continu déclenche une temporisation au moins égale à deux fois le temps de démarrage de l'onduleur et, au terme de ladite temporisation, lance une procédure de décharge du bus continu au moyen d'un système de décharge adapté.

Selon un mode de réalisation de l'invention, lesdits moyens de gestion du bus continu sont compris dans l'onduleur.

Selon un autre mode de réalisation de l'invention, un dispositif spécifique de gestion du bus continu, distinct de l'onduleur, et alimenté en énergie, constitue lesdits moyens de gestion du bus continu.

Avantageusement, le dispositif de gestion du bus continu comprend ledit système de décharge du bus continu.

Avantageusement, le dispositif de gestion du bus continu comprend par ailleurs une horloge astronomique permettant de lancer le dispositif selon l'invention uniquement pendant les heures de jour.

Avantageusement, ledit au moins un micro-convertisseur est par ailleurs configuré pour se placer automatiquement dans un mode de veille lorsque la tension du bus continu est inférieure à la tension seuil bas Va ou supérieure à la tension seuil haut Vd.

### Brève description des figures

D'autres caractéristiques et avantages vont apparaître dans la description détaillée qui suit faite en regard des dessins annexés qui représentent :
- la figure 1A : un schéma simple représentant un premier mode de réalisation du dispositif selon l'invention ;
- la figure 1B : un schéma simple représentant un second mode de réalisation du dispositif selon l'invention ;
- la figure 2 : un diagramme représentant la puissance injectée dans le bus continu du système, permettant de décrire le fonctionnement global du dispositif selon l'invention ;
- les figures 3A à 3D : des diagrammes fondés sur le diagramme de la figure 2 et permettant la description de différentes phases de fonctionnement du dispositif selon l'invention.

### Description détaillée d'au moins un mode de réalisation

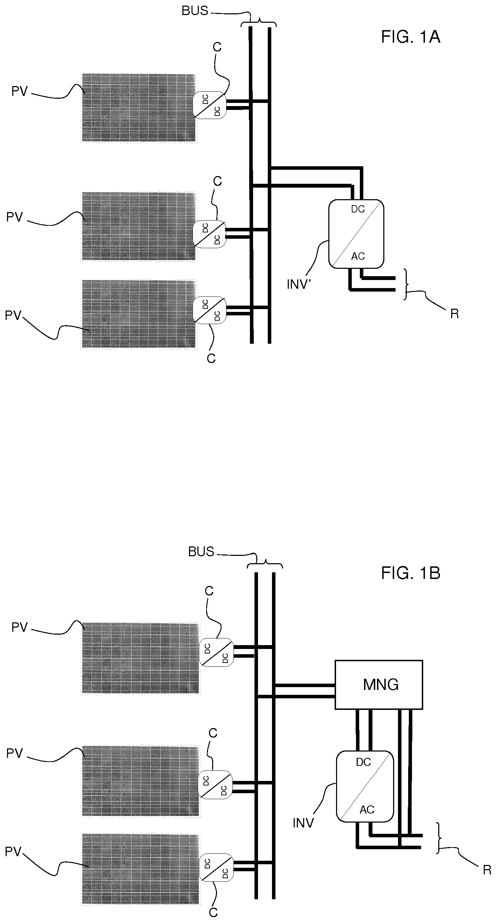

Les figures 1A et 1B représentent les deux principaux modes de réalisation de l'invention. A chaque module photovoltaïque PV est associé un micro-convertisseur C de type boost continu / continu. Ces micro-convertisseurs C sont connectés en parallèle et raccordés à un onduleur central INV,INV'.

Selon le mode de réalisation de la figure 1A, le dispositif selon l'invention comporte un onduleur spécifique INV' optimisé.

Selon le mode de réalisation de la figure 1B, le dispositif selon l'invention comporte un onduleur standard INV, associé à un module spécifique MNG appelé « DC bus manager » en anglais, correspondant à des moyens de gestion MNG du bus continu BUS.

Dans les deux cas, l'élément spécifique - onduleur spécifique INV' ou « DC bus manager » MNG - assure la conduite et la régulation du bus continu BUS.

Les micro-convertisseurs C fonctionnent en source de courant et extraient l'énergie des modules photovoltaïques PV pour la fournir à l'onduleur INV,INV' qui l'injecte dans un réseau de distribution R.

Sur le principe, une caractéristique essentielle de l'invention réside dans le fait que chaque micro-convertisseur C a la capacité de décider de manière autonome de son mode de marche, uniquement par lecture du niveau de tension sur le bus continu BUS, sans recours à un quelconque système de communication avec l'onduleur INV' ou avec le « DC bus manager » MNG.

Dans la suite de la description, on décrit le fonctionnement du mode de réalisation particulier de la figure 1B, dans lequel le dispositif selon l'invention comporte un « DC bus manager » MNG. Il est évident que le fonctionnement décrit ci-après est parfaitement transposable au cas de la figure 1A dans lequel un onduleur spécifique INV' comprend des moyens pour gérer le bus continu BUS.

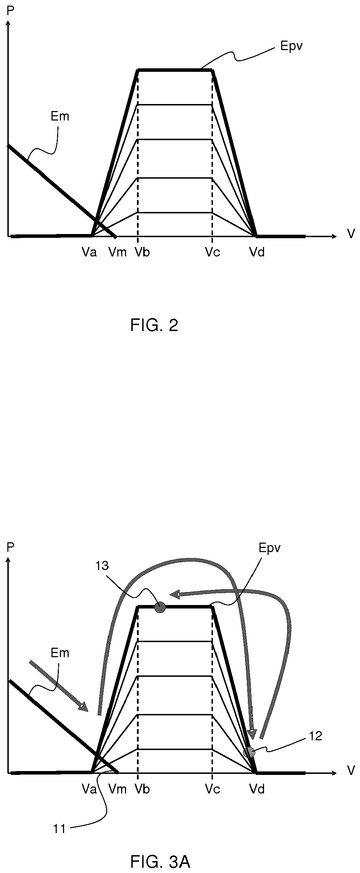

La figure 2 représente un diagramme de fonctionnement général du dispositif selon l'invention. Plus précisément, la figure 2 représente un diagramme avec :
- en ordonnée : la puissance P injectée dans le bus continu BUS :
   ∘ en provenance des modules photovoltaïques PV, via les micro-convertisseurs C, correspondant à l'énergie Epv sur le diagramme ; ou :
   ∘ en provenance du « DC bus manager » MNG, correspondant à l'énergie Em sur le diagramme,
- en abscisse : la tension V du bus continue BUS.

Ainsi, le « DC bus manager » MNG a la capacité d'injecter une faible quantité d'énergie dans le bus continu BUS tant que son niveau de tension est bas. Cette énergie charge le bus continu BUS à un niveau de tension minimum Vm. Quand ce niveau est atteint, l'injection d'énergie par le « DC bus manager » MNG s'interrompt.

Chaque micro-convertisseur C est programmé pour transmettre au bus continu BUS le maximum de puissance lorsque la tension de bus est comprise dans le domaine compris entre une première tension Vb et une deuxième tension Vc. A l'extérieur de ce domaine, les micro-convertisseurs C limitent la puissance transmise des modules photovoltaïques PV au bus continu BUS. En dessous d'une tension seuil bas Va et au dessus d'une tension seuil haut Vd, les micro-convertisseurs se placent en veille, arrêtent la conversion et stoppent donc l'injection de puissance des modules photovoltaïques PV au bus continu BUS. Les tensions visées ci-dessus vérifient la relation suivante : 0 < Va < Vm < Vb < Vc < Vd.

D'autre part, le « DC bus manager » MNG est doté d'une alimentation raccordée au réseau R. Optionnellement, il est par ailleurs pourvu d'une horloge astronomique interne non représentée lui permettant de lancer le système de production d'énergie photovoltaïque uniquement pendant les heures du jour.

Préférentiellement, le « DC bus manager » MNG comprend également un système dédié de décharge du bus continu BUS. Il peut aussi comprendre des moyens de mesure du courant continu injecté dans l'onduleur INV.

Les figures 3A à 3D représentent les différentes phases de fonctionnement du dispositif selon l'invention.

Dans le cas de la figure 3A, l'installation est en phase de démarrage, par exemple au lever du jour. Le « DC bus manager » MNG est mis sous tension si le réseau R est disponible, par exemple au top de l'horloge astronomique éventuellement comprise dans le dispositif. Le « DC bus manager » MNG charge alors le bus continu BUS jusqu'à atteindre la tension minimum Vm, correspondant au point 11 sur la figure 3A.

La tension Vm est choisie pour être inférieure à la plage de fonctionnement de l'onduleur Vb - Vc, de façon à ce que l'onduleur INV ne démarre pas et ne décharge pas le bus continu BUS lors de cette phase de démarrage, ce qui serait une consommation permanente d'énergie durant les jours sans ensoleillement suffisant.

En revanche, la tension minimum Vm se situe dans la plage de démarrage des micro-convertisseurs C, donc supérieure à Va, car lesdits micro-convertisseurs C, dès que l'ensoleillement apparaît et que la tension du bus est supérieure à la tension seuil bas Va , commencent à injecter de l'énergie sur le bus continu BUS pour en faire monter le niveau de tension.

L'onduleur INV nécessite généralement un temps de démarrage de l'ordre de 30 secondes, ce qui entraîne une accumulation de l'énergie dans le bus continu BUS pendant cette durée. Le niveau de tension du bus continu BUS atteint très vite une tension supérieure à la deuxième tension Vc, borne supérieure de la plage de fonctionnement de l'onduleur, ce qui impose aux micro-convertisseurs C de limiter l'injection de puissance dans le bus continu BUS. La tension du bus continu BUS se stabilise au point d'équilibre pour lequel l'apport d'énergie des micro-convertisseurs C égale la consommation de l'onduleur INV avant son couplage au réseau de distribution R, correspondant au point 12 sur la figure 3A.

Dès que l'onduleur INV commence à alimenter le réseau de distribution R en courant alternatif, la tension de bus continu BUS diminue à nouveau et vient se positionner dans le plateau Vb - Vc, à un niveau où l'onduleur injecte un maximum de puissance sur le réseau R, correspondant au point 13 sur le diagramme 3A.

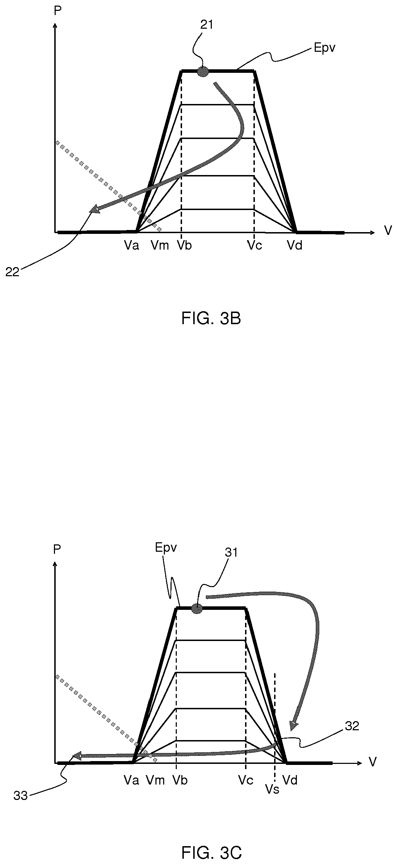

La figure 3B représente le cas où le réseau de distribution R est coupé alors que le dispositif se trouve au point de fonctionnement nominal 21, par exemple en cas d'intervention d'urgence, empêchant l'onduleur INV d'y injecter du courant alternatif. Dans ce cas, d'une part l'onduleur INV se déconnecte du réseau R et d'autre part le « DC bus manager » MNG décharge le bus continu BUS. Cette décharge est typiquement réalisée à travers une impédance non représentée, configurée de telle manière que la tension du bus continu BUS passe en dessous de la tension seuil bas Va en un temps inférieur à celui nécessaire pour la relance de l'injection par les micro-convertisseurs C. Cette durée est typiquement de l'ordre de 2 secondes. Cette décharge a pour effet d'arrêter l'ensemble des micro-convertisseurs C. Le bus continu BUS reste alors à une tension d'arrêt, voisine de la tension de circuit-ouvert Voc des modules photovoltaïques PV, typiquement de l'ordre de 40V, correspondant au point 22 sur la figure 3B. Cet état perdure tant que « DC bus manager » MNG n'est pas réalimenté par le réseau R. Lorsque le réseau R revient, l'installation repasse le cas échéant en phase de démarrage, si l'ensoleillement est suffisant.

Ce mode de fonctionnement traduit par la figure 3B et rendu possible par le dispositif selon l'invention présente l'avantage de sécuriser totalement l'installation en cas d'intervention d'urgence, car aucun circuit n'est à une tension dangereuse tant que le réseau de distribution R est absent.

La figure 3C représente un mode de fonctionnement correspondant au cas où l'onduleur INV s'arrête en raison d'une anomalie, alors qu'il se trouvait à un point de fonctionnement nominal 31.

Cela peut se produire lorsque l'onduleur INV est défaillant ou lorsqu'il détecte une condition de découplage du réseau R, par exemple si la fréquence réseau est en dehors de sa fourchette de tolérance ou en cas de problème d'isolement, ...etc. Dans ce cas, l'onduleur INV cesse d'injecter du courant alternatif sur le réseau R. En conséquence, la tension du bus continu BUS augmente jusqu'à se stabiliser, comme dans le cas du démarrage, au point d'équilibre correspondant au point 32 pour lequel l'ensemble des micro-convertisseurs C fournit seulement la puissance consommée par l'onduleur INV. Dans un mode de réalisation préféré, le franchissement d'un seuil de tension Vs, légèrement inférieur à la tension seuil haut Vd, déclenche une temporisation dans le « DC bus manager » MNG permettant de distinguer ce cas de celui du démarrage. Cette temporisation peut typiquement être de l'ordre de 2 minutes. Au terme de cette temporisation, le « DC bus manager » MNG lance une procédure de décharge du bus continu BUS qui stoppe l'installation et maintient le bus continu BUS à la tension de circuit ouvert Voc des modules photovoltaïques, correspondant au point 33.

Selon le mode de mise en oeuvre, la recharge du bus continu BUS est suspendue soit jusqu'à un redémarrage manuel, soit jusqu'au terme d'une temporisation de l'ordre de quelques minutes, typiquement 15 minutes environ. La recharge du bus continu BUS entraîne soit la procédure de démarrage décrite à la figure 3A si l'onduleur INV est en mesure de recommencer à injecter du courant alternatif sur le réseau R, soit une procédure d'arrêt complet de l'installation dans le cas d'une anomalie confirmée empêchant l'onduleur INV d'injecter du courant alternatif sur le réseau R.

Optionnellement, dans l'hypothèse d'un risque de ne pas savoir discriminer une montée de tension liée à un excès de puissance injectée dans l'onduleur INV et un arrêt de l'onduleur INV, le dispositif selon l'invention peut prévoir des moyens pour mesurer la puissance injectée dans le bus continu BUS par les micro convertisseurs C par l'intermédiaire d'une mesure de courant dans le « DC bus manager » MNG. Ceci impose alors au « DC bus manager » MNG d'être câblé en série comme représenté sur la figure 1B, le bus continu BUS traversant le « DC bus manager » MNG.

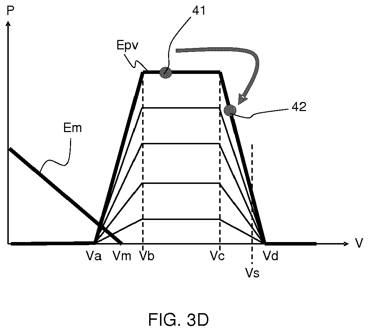

La figure 3D représente le fonctionnement du dispositif selon l'invention en cas de surcharge de l'onduleur INV survenant alors que le dispositif se trouve à un point de fonctionnement nominal 41.

Cela se produit dans le cas où la puissance délivrée par l'ensemble des micro-convertisseurs C excède celle admissible par l'onduleur INV. La tension du bus continu BUS augmente alors jusqu'à dépasser la deuxième tension Vc, borne supérieure de la plage de fonctionnement nominal Vb - Vc. Suivant le profil du diagramme 3D, chaque micro-convertisseur C réduit alors sa production et le système se stabilise sur le segment compris entre la deuxième tension Vc et la tension seuil haut Vd, correspondant au point 42 de la figure 3D, aussi longtemps que la surcharge dure. Ce niveau de tension au point 42 est suffisamment éloigné du seuil de tension Vs, de sorte que le « DC bus manager » MNG ne lance pas la procédure de décharge du bus continu BUS.

Enfin, en cas de déconnexion d'un ou de l'ensemble des micro-convertisseurs C, aucun démarrage de la conversion d'énergie n'est possible, et donc le bus continu BUS reste à un niveau de tension égal à la plus grande des tensions en circuit ouvert des modules photovoltaïques PV, soit une valeur de l'ordre de 40V.

Lorsque la déconnexion d'un ou plusieurs micro-convertisseurs C se produit en fonctionnement, c'est-à-dire alors que le bus continu BUS est chargé, alors chaque micro-convertisseur C détecte une montée en tension à sa sortie et l'annulation du courant de sortie. Il s'ensuit un arrêt de la conversion d'énergie par les micro-convertisseurs C et une diminution de leur tension de sortie. La tension du bus continu BUS se stabilise alors à la tension de circuit ouvert Voc des modules photovoltaïques PV.

Dans tous les cas, les micro-convertisseurs C restent ensuite dans un état de veille, alimentés par les modules photovoltaïques PV, et prêts à redémarrer dès que la tension du bus continu BUS dépassera à nouveau le niveau de la tension seuil bas Va.

Dans tous les modes de fonctionnement décrits ci-dessus, chaque élément du système est autonome pour déterminer quel comportement il doit avoir, qu'il s'agisse des micro-convertisseurs C, du « DC bus manager » MNG ou de l'onduleur INV,INV'. Aucun dispositif de communication supplémentaire n'est nécessaire. Par ailleurs, le dispositif selon l'invention est en permanence dans la configuration la plus sûre possible, en particulier dans le cas d'arrêt d'urgence de l'installation.

En résumé, le dispositif selon l'invention permet à chaque micro-convertisseur C qu'il comporte de définir son mode de marche, uniquement par l'analyse du niveau de tension du bus continu BUS, sans recours à un système de communication avec l'onduleur INV,INV' ou le « DC bus manager » MNG. La mesure de tension du bus continu BUS, qui est déjà réalisée pour permettre le fonctionnement de l'onduleur INV,INV' dans ce type d'installation, ne nécessite pas de développement de composants spécifiques supplémentaires. Le nombre de composants critiques pour le bon fonctionnement du dispositif est réduit et sa fiabilité est par conséquent accrue.

Le mode de réalisation préféré, décrit ci-dessus, comporte des panneaux photovoltaïques mais, alternativement, le bus continu BUS peut être alimenté en puissance par d'autres types de générateurs électriques tels que des générateurs éoliens ou hydrauliques connectés audit bus continu BUS par l'intermédiaire de convertisseurs adaptés.

Avantageusement, le système selon l'invention peut être connecté à une borne de recharge destinée à recharger les batteries d'un véhicule électrique.

## Revendications

1. Système de commande d'un équipement de production d'électricité photovoltaïque comprenant :
• au moins un micro-convertisseur continu / continu (C) raccordé à un bus continu (BUS) et connecté à un module photovoltaïque (PV) ;
• un onduleur (INV,INV') pour convertir le courant continu issu du bus continu (BUS) en courant alternatif destiné à un réseau de distribution électrique (R) ;
• ledit au moins un micro-convertisseur (C) comprenant des moyens pour déterminer de manière autonome le niveau de puissance à injecter dans le bus continu (BUS) en fonction du niveau de tension dudit bus continu (BUS) ;
• ledit au moins un micro-convertisseur (C) stoppant l'injection de puissance des modules photovoltaïques (PV) dans le bus continu (BUS) lorsque la tension du bus continu (BUS) est inférieure à une tension seuil bas Va et stoppe l'injection de puissance des modules photovoltaïques (PV) dans le bus continu (BUS) lorsque la tension du bus continu (BUS) est supérieure à une tension seuil haut Vd ;
**caractérisé en ce que**
• ledit système comprend en outre des moyens de gestion du bus continu (MNG,INV'), et **en ce que** lesdits moyens de gestion du bus continu (MNG,INV') sont configurés pour injecter de l'énergie dans le bus continu (BUS) lorsque la tension dudit bus continu (BUS) est inférieure à une tension minimum Vm jusqu'à atteindre ladite tension minimum Vm, niveau à partir duquel l'injection d'énergie s'interrompt.

2. Système selon la revendication 1, **caractérisé en ce que** ledit au moins un micro-convertisseur (C) est configuré pour :
• injecter un maximum de puissance des modules photovoltaïques (PV) dans le bus continu (BUS) lorsque la tension du bus continu (BUS) est comprise entre une première tension Vb et une deuxième tension Vc ;
• stopper l'injection de puissance des modules photovoltaïques (PV) dans le bus continu (BUS) lorsque la tension du bus continu (BUS) est inférieure à une tension seuil bas Va ou supérieure à une tension seuil haut Vd ;
avec 0 < Va < Vm < Vb < Vc < Vd.

3. Système selon la revendication 2, **caractérisé en ce que** les moyens de gestion du bus continu (MNG,INV') sont configurés de telle sorte que, lorsque la tension du bus continu (BUS) est supérieure à un seuil de tension Vs, ledit seuil de tension Vs étant supérieur à la deuxième tension Vc et inférieur à la tension seuil haut Vd, ledit dispositif de gestion du bus continu (MNG,INV') déclenche une temporisation au moins égale à deux fois le temps de démarrage de l'onduleur et, au terme de ladite temporisation, lance une procédure de décharge du bus continu (BUS) au moyen d'un système de décharge adapté.

4. Système selon l'une quelconque des revendications 1 à 3, dans lequel lesdits moyens de gestion du bus continu (MNG,INV') sont compris dans l'onduleur (INV').

5. Système selon la revendication 3, dans lequel un dispositif spécifique de gestion du bus continu (MNG), distinct de l'onduleur (INV), et alimenté en énergie, constitue lesdits moyens de gestion du bus continu.

6. Système selon la revendication 5, **caractérisé en ce que** le dispositif de gestion du bus continu (MNG) comprend ledit système de décharge du bus continu.

7. Système selon l'une quelconque des revendications 5 à 6, **caractérisé en ce que** le dispositif de gestion du bus continu (MNG) comprend par ailleurs une horloge astronomique permettant de lancer le dispositif selon l'invention uniquement pendant les heures de jour.

8. Système selon l'une quelconque des revendications précédentes, **caractérisé en ce que** ledit au moins un micro-convertisseur (C) est par ailleurs configuré pour se placer automatiquement dans un mode de veille lorsque la tension du bus continu (BUS) est inférieure à la tension seuil bas Va ou supérieure à la tension seuil haut Vd.

## Patentansprüche

1. Steuersystem für eine Ausrüstung zur Erzeugung von Fotovoltaikstrom, umfassend:
- mindestens einen Mikro-Gleichspannungswandler (C), der an einen Gleichstrombus (BUS) angeschlossen und mit einem Fotovoltaikmodul (PV) verbunden ist;
- einen Wechselrichter (INV, INV'), um den Gleichstrom, der aus dem Gleichstrombus (BUS) stammt, in Wechselstrom, der für ein Stromversorgungsnetz (R) bestimmt ist, umzuwandeln;
- wobei der mindestens eine Mikro-Gleichspannungswandler (C) Mittel umfasst, um autonom das in den Gleichstrombus (BUS) einzuleitende Leistungsniveau in Abhängigkeit vom Spannungsniveau des Gleichstrombusses (BUS) zu bestimmen;
- wobei der mindestens eine Mikro-Gleichspannungswandler (C) die Einleitung von Leistung von den Fotovoltaikmodulen (PV) in den Gleichstrombus (BUS) stoppt, wenn die Spannung des Gleichstrombusses (BUS) niedriger als eine untere Grenzspannung Va ist, und die Einleitung von Leistung von den Fotovoltaikmodulen (PV) in den Gleichstrombus (BUS) stoppt, wenn die Spannung des Gleichstrombusses (BUS) höher als eine obere Grenzspannung Vd ist;
**dadurch gekennzeichnet, dass**
- das System ferner Mittel zur Verwaltung des Gleichstrombusses (MNG, INV') umfasst, und dass die Mittel zur Verwaltung des Gleichstrombusses (MNG, INV') eingerichtet sind, um Strom in den Gleichstrombus (BUS) einzuleiten, wenn die Spannung des Gleichstrombusses (BUS) niedriger als eine Mindestspannung Vm ist, bis die Mindestspannung Vm erreicht ist, ein Niveau, ab dem die Stromeinleitung unterbrochen wird.

2. System nach Anspruch 1, **dadurch gekennzeichnet, dass** der Mikro-Gleichspannungswandler (C) eingerichtet ist, um:
- ein Maximum an Leistung von den Fotovoltaikmodulen (PV) in den Gleichstrombus (BUS) einzuleiten, wenn die Spannung des Gleichstrombusses (BUS) zwischen einer ersten Spannung Vb und einer zweiten Spannung Vc liegt;
- die Einleitung von Leistung von den Fotovoltaikmodulen (PV) in den Gleichstrombus (BUS) zu stoppen, wenn die Spannung des Gleichstrombusses (BUS) niedriger als eine untere Grenzspannung Va oder höher als eine obere Grenzspannung Vd ist;
wobei 0 < Va < Vm < Vb < Vc < Vd.

3. System nach Anspruch 2, **dadurch gekennzeichnet, dass** die Mittel zur Verwaltung des Gleichstrombusses (MNG, INV') eingerichtet sind, um, wenn die Spannung des Gleichstrombusses (BUS) höher als eine Grenzspannung Vs ist, wobei die Grenzspannung Vs höher als die zweite Spannung Vc und niedriger als die obere Grenzspannung Vd ist, die Vorrichtung zur Verwaltung des Gleichstrombusses (MNG, INV') eine Verzögerung mindestens gleich zweimal die Startzeit des Wechselrichters auslöst, und nach der Verzögerung ein Verfahren zum Entladen des Gleichstrombusses (BUS) mit Hilfe eines geeigneten Entladesystems startet.

4. System nach einem der Ansprüche 1 bis 3, bei dem die Mittel zur Verwaltung des Gleichstrombusses (MNG, INV') in dem Wechselrichter (INV') enthalten sind.

5. System nach Anspruch 3, bei dem eine spezifische Vorrichtung zur Verwaltung des Gleichstrombusses (MNG), die zum Wechselrichter (INV) unterschiedlich ist und mit Strom versorgt wird, die Mittel zur Verwaltung des Gleichstrombusses darstellt.

6. System nach Anspruch 5, **dadurch gekennzeichnet, dass** die Vorrichtung zur Verwaltung des Gleichstrombusses (MNG) das Entladesystem des Gleichstrombusses umfasst.

7. System nach einem der Ansprüche 5 bis 6, **dadurch gekennzeichnet, dass** die Vorrichtung zur Verwaltung des Gleichstrombusses (MNG) überdies eine astronomische Uhr umfasst, die es ermöglicht, die erfindungsgemäße Vorrichtung nur während der Tageszeiten zu starten.

8. System nach einem der vorhergehenden Ansprüche, **dadurch gekennzeichnet, dass** der mindestens eine Mikro-Spannungsgleichrichter (C) überdies eingerichtet ist, um sich automatisch in einen Standby-Modus zu begeben, wenn die Spannung des Gleichstrombusses (BUS) niedriger als die untere Grenzspannung Va oder höher als die obere Grenzspannung Vd ist.

## Claims

1. System for controlling photovoltaic electricity production equipment comprising:
• at least one DC/DC microconverter (C) connected to a DC bus (BUS) and connected to a photovoltaic module (PV);
• an inverter (INV, INV') for converting the direct current from the DC bus (BUS) into alternative current intended for an electrical distribution network (R);
• said at least one microconverter (C) comprising means for independently determining the level of power to inject into the DC bus (BUS) as a function of the voltage level of said DC bus (BUS);
• said at least one microconverter (C) stopping the injecting of power from the photovoltaic modules (PV) into the DC bus (BUS) when the voltage of the DC bus (BUS) is less than a low threshold voltage Va and stopping the injecting of power from the photovoltaic modules (PV) into the DC bus (BUS) when the voltage of the DC bus (BUS) is greater than a high threshold voltage Vd;
**characterized in that**
• said system additionally comprises means for managing the DC bus (MNG, INV'), and **in that** said means for managing the DC bus (MNG, INV') are configured to inject power into the DC bus (BUS) when the voltage of said DC bus (BUS) is less than a minimum voltage Vm until said minimum voltage Vm is reached, from which level the injecting of power is interrupted.

2. System according to Claim 1, **characterized in that** said at least one microconverter (C) is configured to:
• inject a maximum of power from the photovoltaic modules (PV) into the DC bus (BUS) when the voltage of the DC bus (BUS) is between a first voltage Vb and a second voltage Vc;
• stop the injecting of power from the photovoltaic modules (PV) into the DC bus (BUS) when the voltage of the DC bus (BUS) is less than a low threshold voltage Va or greater than a high threshold voltage Vd;
where 0 < Va < Vm < Vb < Vc < Vd.

3. System according to Claim 2, **characterized in that** the means for managing the DC bus (MNG, INV') are configured such that, when the voltage of the DC bus (BUS) is greater than a voltage threshold Vs, said voltage threshold Vs being greater than the second voltage Vc and less than the high threshold voltage Vd, said device for managing the DC bus (MNG, INV') triggers a timeout at least equal to twice the inverter startup time and, at the end of said timeout, starts a procedure for discharging the DC bus (BUS) by means of a suitable discharge system.

4. System according to any one of Claims 1 to 3, wherein said means for managing the DC bus (MNG, INV') are comprised in the inverter (INV').

5. System according to Claim 3, wherein a specific device for managing the DC bus (MNG), distinct from the inverter (INV) and supplied with power, forms said means for managing the DC bus.

6. System according to Claim 5, **characterized in that** the device for managing the DC bus (MNG) comprises said system for discharging the DC bus.

7. System according to either Claim 5 or Claim 6, **characterized in that** the device for managing the DC bus (MNG) comprises, moreover, an astronomical clock for starting the device according to the invention only during daylight hours.

8. System according to any one of the preceding claims, **characterized in that** said at least one microconverter (C) is moreover configured to be placed automatically in a standby mode when the voltage of the DC bus (BUS) is less than the low threshold voltage Va or greater than the high threshold voltage Vd.
